# EUROPÄISCHE PATENTSCHRIFT

(11) **EP 2 633 983 B1**
(45) Veröffentlichungstag und Bekanntmachung des Hinweises auf die Patenterteilung: **08.05.2019**
(21) Anmeldenummer: 13156680.4
(22) Anmeldetag: 26.02.2013
(51) Int. Cl.: B29D 23/00, B29C 35/02, B29C 53/08, F16L 11/04

(54) **Gekrümmter Formschlauch sowie Verfahren und Vorrichtung zur Herstellung von gekrümmten Formschläuchen**
Curved pre-formed hose and method and device for producing curved pre-formed hoses
Tuyau coudé ainsi que procédé et dispositif de fabrication de tuyaux coudés

(30) Priorität: 29.02.2012 DE 102012003967
(43) Veröffentlichungstag der Anmeldung: 04.09.2013
(73) Patentinhaber: VERITAS AG, 63571 Gelnhausen (DE)
(72) Erfinder: Schulz, Volker, 63607 Wächtersbach (DE); Knopp, Matthias, 63486 Bruchköbel (DE); Pascuzzi, Sergio, 63589 Linsengericht-Großenhausen (DE); Kahn, Peter, 63526 Erlensee (DE)
(74) Vertreter: Patentship Patentanwaltsgesellschaft mbH

(56) Entgegenhaltungen:
- EP-A1- 1 595 684
- DE-B3-102007 044 320
- JP-A- H03 199 034
- US-A- 4 242 296

## Beschreibung

Die Erfindung betrifft einen gekrümmten Formschlauch sowie ein Verfahren und eine Vorrichtung zur Herstellung von gekrümmten Formschläuchen.

Formschläuche mit räumlich komplexen Geometrien werden üblicherweise unter Verwendung eines räumlich gekrümmten Dorns hergestellt, wobei ein Schlauchrohling "aufgedornt" bzw. auf den Dorn aufgezogen wird und nach der Vulkanisation wieder "entdornt" bzw. von dem Dorn abgezogen wird. Diese Vorgänge erfolgen i.d.R. manuell und erfordern einen hohen Kraft- und Zeitaufwand der zuständigen Arbeitskraft. Nachteilig sind auch die erforderliche Wartung, Reinigung, Instandhaltung und Bereitstellung von Dornen mit unterschiedlichen Geometrien.

Verfahren mit "verlorenen" Dornen sind z.B. in der DE 44 019 84 C2 oder US 4,019,939 beschrieben. Dort wird der Formschlauch z.B. durch Verflüssigung des Dorns "entdornt".

Diese Verfahren sind mit einem hohen fertigungstechnischen und energetischen Aufwand verbunden. Ferner sind die aus der DE 44 019 84 C2 oder US 4,019,939 bekannten Verfahren aufgrund der Schmelzfähigkeit des Dorns für eine Thermofixierung des Schlauchrohlings nicht geeignet.

Die Druckschrift JP H03 199 034 A betrifft ein Verfahren zur effizienten Herstellung gebogener Schläuche.

Die Druckschrift DE 10 2007 044 320 B3 betrifft ein Kernwerkzeug in Rohr- und/oder Schlauchform zur Herstellung einer inneren Kontur eines Hohlkörpers, bei dem das Kernwerkzeug aus einem elastischen Material besteht und mit einem durchgängigen Kanal versehen ist, der mit einem Mittel gefüllt ist

Die Druckschrift EP 1 595 684 A1 betrifft ein Verfahren zur Herstellung einer Komponente mit einem schlauchförmigen Körper. Der Erfindung liegt die Aufgabe zugrunde, einen gekrümmten Formschlauch sowie ein Verfahren und eine Vorrichtung zur Herstellung von gekrümmten Formschläuchen unter Beseitigung der sich aus dem Stand der Technik ergebenden Nachteile bereit zu stellen.

Um die der Erfindung zugrunde liegende Aufgabe zu lösen, wird das Verfahren zur Herstellung von gekrümmten Formschläuchen nach Anspruch 1 bereit gestellt.

In Schritt a dieses Anspruchs erstreckt sich das Formwerkzeug vorzugsweise entlang einer Geraden, so dass das Verbinden des Schlauchrohlings mit dem Formwerkzeug vereinfacht ist. Es wird als Verbinden des Schlauchrohlings mit dem Formwerkzeug im Sinne des Patentanspruchs verstanden, wenn der Schlauchrohling auf das Formwerkzeug aufgebracht und/oder das Formwerkzeug in den Schlauchrohling eingebracht wird und/oder umgekehrt. Das Formwerkzeug kann beispielsweise als Dorn, vorzugsweise als Innendorn und/oder als Außenwerkzeug ausgebildet sein. Ein Innendorn liegt am Innenumfang des Schlauchrohlings an und ein Außenwerkzeug entsprechend am Außenumfang des Schlauchrohlings. Das Formwerkzeug kann zumindest abschnittsweise aus einem Formgedächtnismaterial hergestellt sein, wobei die Phasen- bzw. Formumwandlung des Formwerkzeugs thermisch oder spannungsinduziert herbeigeführt werden kann. Ferner ist es auch möglich, ein verformbares Formwerkzeug, das mechanisch oder mittels Wirkmedium verformt wird und den Schlauch in eine über die Gestalt eines Außenwerkzeugs und/oder eines Innenwerkzeugs festgelegte Geometrie überführt, als Formwerkzeug zu verwenden. Als Beispiel können Streckmetalle genannt werden. Bevorzugt ist das Formwerkzeug zumindest in einem axialen Abschnitt in radialer Richtung bezogen auf die Achse des Schlauchrohlings verformbar. Besonders bevorzugt kann der Umfang des Formwerkzeugs in wenigstens einem axialen Abschnitt des Formwerkzeugs verändert werden, wobei ein Durchmesser bevorzugt konzentrisch zur Achse vergrößert und/oder verringert werden kann. Dadurch sind unterschiedliche Durchmesser und/oder Querschnittsformen darstellbar. Insbesondere können durch ein derart verformbares Formwerkzeug auch Querschnittsänderungen des Formschlauchs erzeugt werden. Auch ist es möglich eine Formwerkzeug zu verwenden, das eine nicht einheitliche Oberflächentopographie aufweist. Über derartige Querschnittsänderungen und/oder Oberflächentopografien können bestimmte Strömungseigenschaften verändert werden, insbesondere im Hinblick auf Wärmeaustausch, Drosselfunktion bzw. gezielte Änderung des Strömungswiderstands. Ferner kann ein mehrfach strukturiertes bzw. geteiltes Formwerkzeug verwendet werden, um einen Formschlauch mit mehreren Lumen zu erzeugen. Dadurch sind bspw. Hin- und Rücklauf in einem Schlauch bewerkstelligbar. Das Formwerkzeug kann auch aus mehreren Komponenten und/oder Schichten bestehen. Ein Beispiel eines Mehrkomponentenformwerkzeugs ist ein beschichteter Dorn, insbesondere ein Zweikomponentendorn mit einer Strukturschicht bspw. aus Metall und mit einer Funktionsschicht bspw. aus Kunststoff wie z.B. PTFE an der Oberfläche. Dieser Zweikomponentendorn ist besonders einfach entformbar. Das Formwerkzeug kann bspw. vor dem Verbinden mit dem Schlauchrohling bereits in einem gekrümmten Zustand vorliegen oder gemeinsam mit dem Schlauchrohling durch Verformung in einen gekrümmten Zustand überführt werden. Demnach sind die Schritte a und b keiner bestimmten zeitlichen Abfolge unterlegen. Die Schritte a und b können bspw. auch im Wesentlichen zeitgleich erfolgen. Der flexible Schlauchrohling ist vorzugsweise ein unvernetzter extrudierter Kunststoffschlauch aus einem Elastomer, oder aus einem thermoplastischen Kunststoff, wie bspw. Polyvinylchlorid (PVC), Polyethylen (PE), Polymethylmethacrylat (PMMA), Polypropylen (PP), Polyethylenterephthalat (PET), Polytetrafluorethylen (PTFE), Polyurethan (PU), Polyamid (PA) und/oder Polystyrol (PS). Die Wandstärke des Schlauchrohlings und/oder des Formschlauchs liegt vorzugsweise im Bereich von 10% bis 75%, bevorzugt im Bereich von 25% bis 60%, besonders bevorzugt im Bereich von 35% bis 50% des Innendurchmessers des Schlauchrohlings und/oder des Formschlauchs. Als Formwerkzeug wird eine Struktur oder ein Körper bezeichnet, die/der beim Fixieren der Form des Schlauchrohlings den Innenumfang und/oder den Außenumfang des Schlauchrohlings zumindest abschnittsweise, vorzugsweise vollflächig kontaktiert und/oder unterstützt. Als Verformung des Formwerkzeugs wird eine Verformung dieser Struktur bzw. dieses Körpers bzw. des Werkstoffs des Formwerkzeugs bezeichnet. Das Formwerkzeug wird vorzugsweise während der Formfixierung (Schritt c) eingesetzt, um dem Schlauchrohling seine bestimmungsgemäße Form zu verleihen, weil der Schlauchrohling seine bestimmungsgemäße Form ohne das Formwerkzeug nicht halten würde. Durch das Fixieren der Form des Schlauchrohlings wird das Formwerkzeug dann entbehrlich, da der Schlauchrohling anschließend eine ausreichende Eigenstabilität aufweist, um diese bestimmungsgemäße Form zu halten. Das Fixieren der Form des Schlauchrohlings erfolgt vorzugsweise durch Thermofixieren. Der Begriff "Thermofixieren" bezeichnet eine Wärmebehandlung des Schlauchrohlings, um dessen räumlich gekrümmte Form zu fixieren und damit eine spätere, unerwünschte, Dimensionsänderung zu verhindern. Die Wärme zur Thermofixierung des Schlauchrohlings kann vom Inneren und/oder vom Äußeren des Schlauchrohlings zugeführt werden, bspw. durch Induktion, Strahlung, Mikrowellen, Dampf oder dgl.. Als räumlich gekrümmte Form wird im Rahmen der Erfindung jede Form eines Schlauches bezeichnet, deren Achse in einer, zwei, drei oder mehr Krümmungsebenen gekrümmt ist. Die erfindungsgemäß hergestellten, gekrümmten Formschläuche werden bspw. als Kraftstoffleitungen, Leckölleitungen, Steuerleitungen oder Ladeluftschläuche im Automobilbereich eingesetzt. Insbesondere im Automobilbereich sind enge Biegeradien erforderlich. Nach dem erfindungsgemäßen Verfahren können für Formschläuche mit identischen Innendurchmessern und Wandstärken beispielsweise kleinere Biegeradien und größere Längen erreicht werden, als dies nach herkömmlichen Methoden der Fall ist.

Bevorzugte Weiterbildungen der Erfindung sind Gegenstände der Unteransprüche.

Es kann sich als vorteilhaft erweisen, wenn der Schlauchrohling in Schritt a auf das Formwerkzeug aufgebracht, vorzugsweise aufextrudiert wird. Weil das Extrusionsformwerkzeug gleichzeitig zur Fixierung der Form des Schlauchrohlings eingesetzt werden kann, kann ein Wechsel des Formwerkzeugs nach dem Extrusionsvorgang und vor der Fixierung der Form entfallen. In einer bevorzugten Ausführung wird der Schlauchrohling mit dem Formwerkzeug coextrudiert.

Vorteilhafterweise wird der Schlauchrohling nach Schritt a mit einem verformbaren Innenwerkzeug in ein Formwerkzeug eingeführt. Das Formwerkzeug ist dabei bevorzugt ein verformbares Außenwerkzeug.

Es kann von Vorteil sein, wenn das Formwerkzeug in Schritt b und/oder in Schritt d elastisch oder plastisch, vorzugsweise durch Biegung, verformt wird. Als elastische Verformung wird eine reversible, umkehrbare oder nicht dauerhafte, Verformung des Formwerkzeugs bzw. seines Werkstoffs genannt. Das Formwerkzeug bzw. der Werkstoff des Formwerkzeugs weist dazu vorzugsweise eine entsprechende Elastizität oder Flexibilität auf. Als plastische Verformung wird eine irreversible und dauerhafte Verformung des Formwerkzeugs bezeichnet. Das Formwerkzeug ist dazu vorzugsweise entsprechend umformbar und der Werkstoff des Formwerkzeugs weist eine entsprechende Eigenschaft bzw. Plastizität bzw. Duktilität auf. Die Verformung des Formwerkzeugs und ggf. des aufgebrachten Schlauchrohlings kann bspw. durch eine Einlegeform, einen Roboter, Einschieben in eine Außenform oder dgl. erreicht werden. Im Falle eines elastisch verformbaren oder biegbaren Formwerkzeugs wird die Verformung bspw. durch Einlegen in eine Form erreicht. Es ist auch möglich, dass eine verformbare Form verwendet wird, wobei das Formwerkzeug und ggf. der aufgebrachte Schlauchrohling zunächst in eine gerade Form eingelegt und anschließend die Form mit Inhalt in einen gekrümmten Zustand überführt wird.

Es kann sich als nützlich erweisen, wenigstens zwei der Schritte a bis e, insbesondere die Schritte a und b, vorzugsweise die Schritte a bis c, bevorzugt die Schritte a bis d, besonders bevorzugt die Schritte a bis e in einem kontinuierlichen Verfahren ausgeführt werden, wobei bevorzugt in Schritt b und/oder in Schritt d der Schlauchrohling bzw. der Formschlauch und/oder das Formwerkzeug durch wenigstens ein weiteres Formwerkzeug verformt wird. Durch die kontinuierliche Fertigung kann der Automatisierungsgrad signifikant erhöht werden, so dass sich größere Stückzahlen zu geringeren Fertigungskosten herstellen lassen. Das weitere Formwerkzeug kann ein mitlaufendes oder feststehendes Formwerkzeug sein. Das weitere Formwerkzeug wird vorzusgweise auf der anderen Seite der Wand des Schlauchrohlings angeordnet als das erste Formwerkzeug, so dass die Formwerkzeuge die Innenseite und die Außenseite des Schlauchrohlings unterstützen.

Es kann sich als praktisch herausstellen, wenn der Schlauchrohling und das Formwerkzeug einen kontinuierlichen Strang bilden, der vorzugsweise zwischen den Schritten a und b, zwischen den Schritten b und c, zwischen den Schritten c und d oder zwischen den Schritten d und e in Abschnitte diskreter Länge zerteilt wird. Dadurch kann sich die Anzahl der zu bearbeitenden Werkstücke und damit der logistische Aufwand bei der Fertigung in den einzelnen Verfahrensschritten verringern. Vorzugsweise wird der Schlauchrohling vor dem Zerteilen vernetzt oder zumindest teilvernetzt.

Es kann aber auch nützlich sein, wenn das Formwerkzeug zumindest in Schritt c beheizt wird. Das Formwerkzeug kann aktiv (z. B. durch eine Heizeinrichtung wie eine Heizschleife) und/oder passiv (z. B. durch Wärmeleitung, Induktion oder dgl.) beheizt werden. Dadurch kann der Prozess der Fixierung der Form des Schlauchrohlings zusätzlich beschleunigt werden. Durch kürzere Fertigungszeiten lassen sich größere Stückzahlen zu geringeren Fertigungskosten erzielen.

In einer vorteilhaften Weiterbildung der Erfindung wird der Formschlauch, vorzugsweise vor Schritt d oder zwischen den Schritten d und e oder nach Schritt e, einem Temperprozess zugeführt. Als Temperprozess wird im Rahmen der Erfindung das Erhitzen des Formschlauchs über einen längeren Zeitraum bezeichnet, um bspw. die Verteilung mechanischer Spannungen im Formschlauch zu kontrollieren oder die Struktur des Formschlauchs zu ändern, oder bspw. verschiedene Schichten des Formschlauchs zu verbinden.

In einer anderen vorteilhaften Weiterbildung der Erfindung wird das Formwerkzeug nach Schritt e einer Wiederverwertung zugeführt. Dazu ist es besonders vorteilhaft, wenn das Formwerkzeug aus einem homogenen, thermoplastischen und nicht thermofixierbaren Werkstoff gefertigt ist. Das Formwerkzeug kann dazu bspw. eingeschmolzen und erneut als Formwerkzeug hergestellt werden. Alternativ wird das Formwerkzeug zumindest soweit erwärmt, dass sich durch die Verformung erzeugte Spannungen lösen und das Formwerkzeug sich in einem Zustand befindet, den es vor der Verformung hatte und somit erneut als Formwerkzeug verwendbar ist. In einer anderen Ausführung wird das Formwerkzeug bspw. zerkleinert und einer anderen Verwendung zugeführt. Auch ist es denkbar das Fomwerkzeug unzerkleinert einer anderen Verwendung zu zu führen.

Es kann nützlich sein, wenn die Form des Schlauchrohlings in Schritt c durch Vernetzung des Schlauchrohlings fixiert wird. Durch die Vernetzung des Schlauchrohlings werden Makromoleküle des Werkstoffs zu einem dreidimensionalen Netzwerk verknüpft. Die auch als Quervernetzung bezeichnete Verknüpfung wird vorzugsweise durch Reaktionen an bereits bestehenden Polymeren erreicht und erfolgt bspw. durch Erwärmung des Schlauchrohlings auf eine Temperatur von ca. 150 bis 300°C, vorzugsweise 180°C bis ca. 250°C. Der Schlauchrohling kann auch vor dem Verbinden mit dem Formwerkzeug bereits vorvulkanisiert werden.

Es kann sich als praktisch herausstellen, wenn das Formwerkzeug rohrförmig oder stangenförmig ausgebildet ist. Derartige Formwerkzeugquerschnitte sind i.d.R. hinreichend biegefähig und formstabil, und können durch Strangpressverfahren wie Extrusion leicht erzeugt werden. Das Formwerkzeug kann einen konstanten Innen- und/oder Außenquerschnitt aufweisen. Der Innenquerschnitt kann hohl oder ausgefüllt sein. Die Innen- und/oder Außenquerschnittform des Formwerkzeugs ist vorzugsweise rund, oval, polygonal, rechteckig oder quadratisch.

Das Formwerkzeug ist als fester, einstückiger und bevorzugt monolithischer Körper ausgebildet.

Es kann von Vorteil sein, wenn das Formwerkzeug aus einem verformbaren Material, vorzugsweise einem Polymer und/oder aus Metall, ausgebildet ist, wobei eine Schmelztemperatur des Werkstoffs des Formwerkzeugs bevorzugt größer ist als eine Temperatur zum Thermofixieren des Schlauchrohlings in Schritt c. Dadurch kann verhindert werden, dass das Formwerkzeug bei der Thermofixierung des Schlauchrohlings ggf. erweicht und die bestimmungsgemäße Form verliert. Besonders geeignet sind Werkstoffe mit bestehendem Recyclingkreislauf, insbesondere sortenreine Werkstoffe.

Es kann aber auch hilfreich sein, wenn der Schlauchrohling mit einem Druckträger, vorzugsweise einem textilen Druckträger, bevorzugt einem geflochtenen Druckträger versehen wird. Die dadurch erzielbaren Formschläuche sind besonders belastbar und druckbeständig.

Es kann allerdings auch von Vorteil sein, wenn der Schlauchrohling nicht mit einem Druckträger versehen ist.

Ein weiterer Aspekt betrifft einen Formschlauch, hergestellt durch das Verfahren nach wenigstens einer der vorangegangenen Ausführungen, wobei der Formschlauch wenigstens eine der folgenden Anforderungen erfüllt:
- Der Formschlauch ist ein medienführender Schlauch vorzugsweise für Kraftfahrzeuge, wobei der Formschlauch vorzugsweise wenigstens eine Schicht aus einem Sperrschichtkunststoff umfasst, bevorzugt wenigstens eine Schicht aus wenigstens einem der Kunststoffe THV, PVDF, PTFE, PFA, FEP, CTFE, ECTFE, FPM oder EVOH.
- Der Formschlauch umfasst einen im Wesentlichen kreisförmigen Innenquerschnitt und/oder Außenquerschnitt.
- Die Wandstärke des Formschlauchs liegt vorzugsweise im Bereich von 10% bis 75%, bevorzugt im Bereich von 25% bis 60%, besonders bevorzugt im Bereich von 35% bis 50% des Innendurchmessers des Formschlauchs.
- Wenigstens ein Biegeradius des Formschlauchs ist kleiner oder gleich dem dreifachen Innendurchmesser des Formschlauchs, vorzugsweise kleiner oder gleich dem 2,5-fachen Innendurchmesser des Formschlauchs, wobei der Biegewinkel vorzugsweise gleich oder größer als 30° ist.
- Die Länge des Formschlauchs ist wenigstens 50-mal größer als der Innendurchmesser des Formschlauchs, vorzugsweise wenigstens 80-mal größer als der Innendurchmesser des Formschlauchs.
- Der Formschlauch umfasst einen Innendurchmesser von maximal 3,2 mm und eine Länge von wenigstens 160 mm.
- Der Formschlauch umfasst einen Innendurchmesser von maximal 7,3 mm und eine Länge von wenigstens 600 mm und/oder wenigstens einen Biegeradius von maximal 20 mm, vorzugsweise bei einem Biegewinkel von mindestens 30°.
- Der Formschlauch umfasst einen Innendurchmesser von maximal 9,3 mm und eine Länge von wenigstens 600 mm und/oder wenigstens einen Biegeradius von maximal 23 mm, vorzugsweise bei einem Biegewinkel von mindestens 30°.
- Der Formschlauch umfasst am Innenumfang und/oder am Außenumfang wenigstens eine Querschnittsänderung, vorzugsweise wenigstens eine Querschnittserweiterung und/oder wenigstens eine Querschnittsverringerung.
- Der Formschlauch umfasst am Innenumfang und/oder am Außenumfang wenigstens einen Vorsprung und/oder wenigstens eine Vertiefung, vorzugsweise von zylindrischer, kugelabschnittsförmiger, kegelförmiger oder kegelstumpfförmiger, pyramidenförmiger oder pyramidenstumpfförmiger, stegförmiger oder rinnenförmiger Gestalt.
- Der Formschlauch umfasst wenigstens zwei oder mehr Volumina.

Ein weiterer Aspekt der vorliegenden Erfindung betrifft eine Vorrichtung gemäß Anspruch 16.

Bevorzugte Weiterbildungen der Erfindung ergeben sich durch Kombinationen von Merkmalen aus der Beschreibung, aus den Ansprüchen und aus den Zeichnungen.

### Kurze Beschreibung der Zeichnungen

- Fig. 1: zeigt schematisch ein Verfahren und eine Vorrichtung zum Aufbringen eines flexiblen Schlauchrohlings auf ein Formwerkzeug aus einem verformbaren Werkstoff im Einklang mit dem ersten Ausführungsbeispiel der Erfindung.
- Fig. 2: zeigt verschiedene Aspekte des erfindungsgemäßen Verfahrens zur Herstellung von gekrümmten Formschläuchen nach dem ersten Ausführungsbeispiel, wobei (a) einen auf eine diskrete Länge zurechtgeschnittenen Verbund bestehend aus dem Formwerkzeug und dem darauf aufgebrachten Schlauchrohling zeigt; (b) eine zweiteilige Negativform zur Thermofixierung des Schlauchrohlings in geöffnetem Zustand zeigt; und (c) die zweiteilige Negativform aus (b) mit eingelegtem Verbund in geschlossenem Zustand zeigt.
- Fig. 3: zeigt weitere Aspekte des erfindungsgemäßen Verfahrens zur Herstellung von gekrümmten Formschläuchen nach dem ersten Ausführungsbeispiel, wobei (a) den Verbund aus Fig. 2 (a) nach der Verformung und der Thermofixierung des Schlauchrohlings zeigt; und (b) einen Vorgang der zweiten Verformung und des Trennens des thermofixierten Formschlauchs und des Formwerkzeugs zeigt.
- Fig. 4: zeigt in (a) den von dem Formwerkzeug getrennten, thermofixierten Formschlauch und in (b) das Formwerkzeug nach der Trennung von dem Formschlauch.
- Fig. 5: zeigt schematisch eine Vorrichtung und ein Verfahren zur Herstellung von gekrümmten Formschläuchen nach dem zweiten Ausführungsbeispiel der Erfindung.
- Fig. 6: zeigt weitere Aspekte des erfindungsgemäßen Verfahrens zur Herstellung von gekrümmten Formschläuchen nach dem zweiten Ausführungsbeispiel, wobei (a) den Verbund bestehend aus dem Formwerkzeug aus einem verformbaren Werkstoff und dem darauf aufgebrachten flexiblen Schlauchrohling im Zustand nach der Thermofixierung des Schlauchrohlings und der zweiten Verformung des Verbundes zeigt; und (b) einen Vorgang des Trennens des thermofixierten Formschlauchs und des Formwerkzeugs zeigt.
- Fig. 7: zeigt in (a) den von dem Formwerkzeug getrennten, thermofixierten Formschlauch und in (b) das Formwerkzeug nach der Trennung von dem Formschlauch.

### Detaillierte Beschreibung der bevorzugten Ausführungsbeispiele

Die Erfindung wird nachstehend mit Bezug auf die Figuren im Detail erläutert.

Das erfindungsgemäße Verfahren zur Herstellung von gekrümmten Formschläuchen 1' umfasst die Schritte:
- Schritt a: Verbinden eines flexiblen Schlauchrohlings 1 mit einem verformbaren Formwerkzeug, wobei das Formwerkzeug 2 als fester und einstückiger Körper ausgebildet ist, und wobei das Formwerkzeug 2 als Innendorn ausgebildet ist, welcher am Innenumfang des Schlauchrohlings 1 anliegt;
- Schritt b: Überführen des Schlauchrohlings 1 und des Formwerkzeugs 2 durch Verformung in einen gekrümmten Zustand;
- Schritt c: Fixieren der Form des mit dem Formwerkzeug 2 verbundenen Schlauchrohlings 1 im gekrümmten Zustand zur Ausbildung des gekrümmten Formschlauchs 1';
- Schritt d: Überführen des Formschlauchs 1' durch eine elastische Verformung des Formschlauchs 1' und des Formwerkzeugs 2 durch eine plastische Verformung des Formwerkzeugs 2 in einen linearen Zustand, in welchem der Formschlauch 1' und das Formwerkzeug 2 voneinander trennbar sind; und
- Schritt e: Trennen des Formschlauchs 1' und des Formwerkzeugs 2.

Die Erfindung betrifft insbesondere ein Verfahren zur Herstellung von dünnen Formschläuchen 1' mit einem biegefähigen Formwerkzeug 2 aus einem gut rezyklierbaren Material. Hintergrund für diese Entwicklung ist die Prozessverbesserung bei Herstellung dünner, dreidimensional gekrümmter Formschläuche 1', die heute mit hohem manuellen Aufwand gefertigt werden. Die Idee besteht darin, ein biegefähiges Formwerkzeug 2 zu verwenden, dieses samt Rohling auf einer Vorrichtung 40 zu verformen und zumindest den Rohling anschließend zu vulkanisieren. Nach der Vulkanisation wird der Verbund derart gerichtet, dass der Formschlauch 1' mit geringem Widerstand abgezogen werden kann. Das Formwerkzeug 2 kann der Wiederverwertung zugeführt werden. Der Formschlauch 1' behält aufgrund der Vernetzung die durch den ersten Biegeprozess erzeugte Form.

Das Funktionsprinzip der Erfindung stellt sich wie folgt dar:
Elastomerschläuche werden als Schlauchrohlinge 1 entweder auf ein verformbares Formwerkzeug 2 in Form eines Rohrs oder einer Stange aufextrudiert oder konventionell gefertigt und anschließend auf ein solches Rohr oder eine solche Stange aufgeschoben. Das Rohr oder Stangenmaterial, das plastisch verformt werden kann, dient bei der Vulkanisation als Formwerkzeug.

Das Rohr oder die Stange kann aus einem Polymer oder aus einem Metall oder einem anderem verfombaren Material hergestellt worden sein, und als Stangenware oder auf einer Spule aufgewickelt angeliefert werden. Sinnvollerweise wird ein gut wieder verwendbares, homogenes Material mit bestehendem Recyclingkreislauf verwendet.

Der aus dem Formwerkzeug 2 und dem darauf aufgebrachten Schlauchrohling 1 bestehende Verbund wird entweder über Einlegen in ein äußeres Formwerkzeug 30 oder eine Schablone oder Biegen über manuelle oder maschinelle Vorrichtungen 40 in Vulkanisationsform gebracht. Hierbei können einzelne oder Mehrfach-Bauteile gefertigt werden.

Nach der Vulkanisation z. B. in einem Autoklav 50 (und eventuellem Abkühlen) können das Formwerkzeug 2 und der formfixierte Formschlauch 1' z.B. mittels einer Richteinheit 60 in eine der Trennung förderliche Form gebracht werden und maschinell oder manuell getrennt werden. Anschließend kann die Weiterverarbeitung wie bei konventionell hergestellten Formschläuchen 1' erfolgen.

Alternativ kann ein nachgeschalteter Temperprozess noch auf dem Formwerkzeug 2 erfolgen und dieser erst nach Abschluss aller Nachbehandlungen entfernt werden.

Bevorzugt wird eine online Fomgebung, d.h. Extrudieren des Schlauchrohlings 1 auf ein von einer Spule abgewickeltes Formwerkzeug 2, wobei evtl. ein Druckträger z. B. im Rundflechtverfahren aufgeflochten wird und eine Deckschicht durch Extrusion aufgebracht wird. Evtl. wird eine Vorvulkanisation der Deckschicht durch lokal zugeführte Energie bewerkstelligt. Dies kann mittels IR, Halogen, Strahlvernetzung, Heißluft, Dampf etc. bewerkstelligt werden. Die Verformung des Verbundes kann durch 3D-Biegen auf einer mitlaufenden oder feststehenden Biegeeinheit 40 bewerkstelligt werden. Anschließend kann das Ablängen in x-fache Werkzeug-/ Rohlingsverbünde und die Vulkanisation erfolgen.

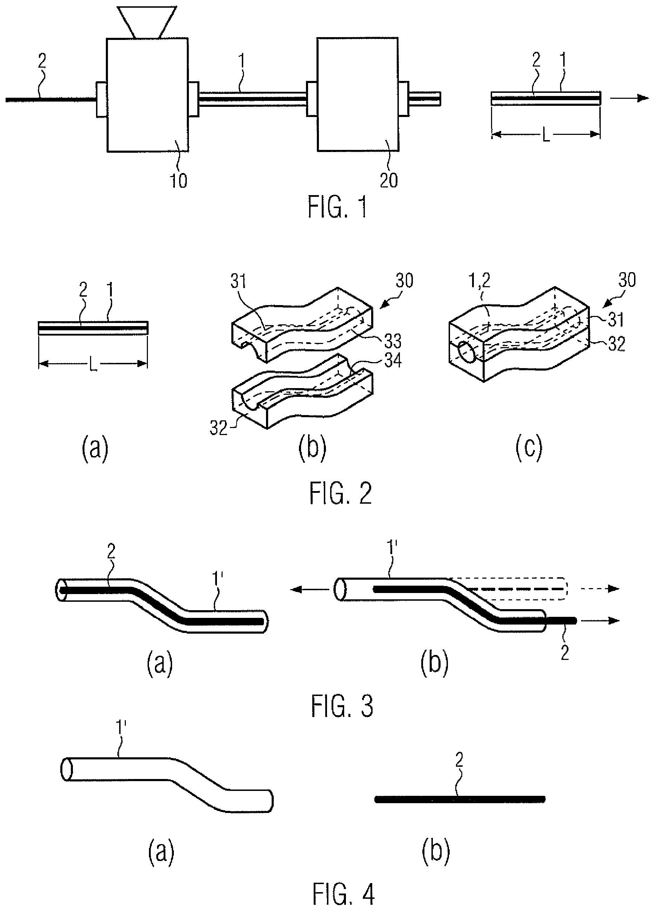

Die Besonderheiten des Verfahrens und der Vorrichtung zur Herstellung von gekrümmten Formschläuchen 1' nach dem ersten Ausführungsbeispiel werden im Zusammenhang mit den Fig. 1 bis 4 nachstehend beschrieben:

### Erstes Ausführungsbeispiel

Fig. 1 zeigt schematisch ein Verfahren und eine Vorrichtung zum Aufbringen eines flexiblen Schlauchrohlings 1 auf ein Formwerkzeug 2 aus einem verformbaren Werkstoff im Einklang mit dem ersten Ausführungsbeispiel der Erfindung. Die Vorrichtung umfasst einen Extruder 10, dem das Formwerkzeug 2 in rohrförmigen oder stangenförmigen Zustand von einem Materiallager, z.B. einer Spule oder als Stangenware, zugeführt wird, um auf dieses Formwerkzeug 2 den flexiblen Schlauchrohling 1 aus einem Elastomer oder einem thermoplastischen Kunststoff aufzuextrudieren. Das Formwerkzeug 2 ist als fester monolithischer Körper aus einem verformbaren Material ausgebildet. Der Verbund aus dem Schlauchrohling 1 und dem Formwerkzeug 2 wird als kontinuierlicher Strang einer Schneideinrichtung 20 zugeführt, die den kontinuierlichen Strang mit hoher Maßhaltigkeit in Abschnitte diskreter Länge L zerteilt. Wie in Fig. 2 zu erkennen ist, werden die Abschnitte diskreter Länge L unter elastischer Verformung des Schlauchrohlings 1 und unter plastischer Verformung des Formwerkzeugs 2 in einen räumlich gekrümmten Zustand überführt und in eine zweiteilige Negativform 30 zur Thermofixierung des Schlauchrohlings 1 eingebracht, so dass sich der Verbund aus dem Schlauchrohling 1 und dem Formwerkzeug 2 in den Formabschnitten 33, 34 der oberen und unteren Formteile 31, 32 befindet. Sodann wird die Negativform 30 verschlossen und zur Thermofixierung erwärmt, um den Schlauchrohling 1 durch Vulkanisierung zu vernetzen und dessen Form zu fixieren.

Nach der Thermofixierung und ggf. Abkühlung des Formwerkzeugs 2 wird der Verbund aus dem formfixierten Formschlauch 1' und dem Formwerkzeug 2 aus der Negativform 30 entnommen (Fig. 3 (a)) und unter elastischer Verformung des Formschlauchs 1' sowie unter plastischer Verformung des Formwerkzeugs 2 in einem im Wesentlichen linearen Zustand getrennt (Fig. 3 (b). Das plastisch verformte Formwerkzeug 2 verbleibt nach der Trennung im Wesentlichen in einem linearen Zustand (Fig. 4 (b)), während der Formschlauch 1' in die durch Thermofixierung fixierte Form zurückkehrt (Fig. 4 (a)).

Das Formwerkzeug 2 kann anschließend zerkleinert und/oder eingeschmolzen und/oder zusammengesetzt und einer Wiederverwertung und/oder Weiterverwendung zugeführt werden.

### Zweites Ausführungsbeispiel

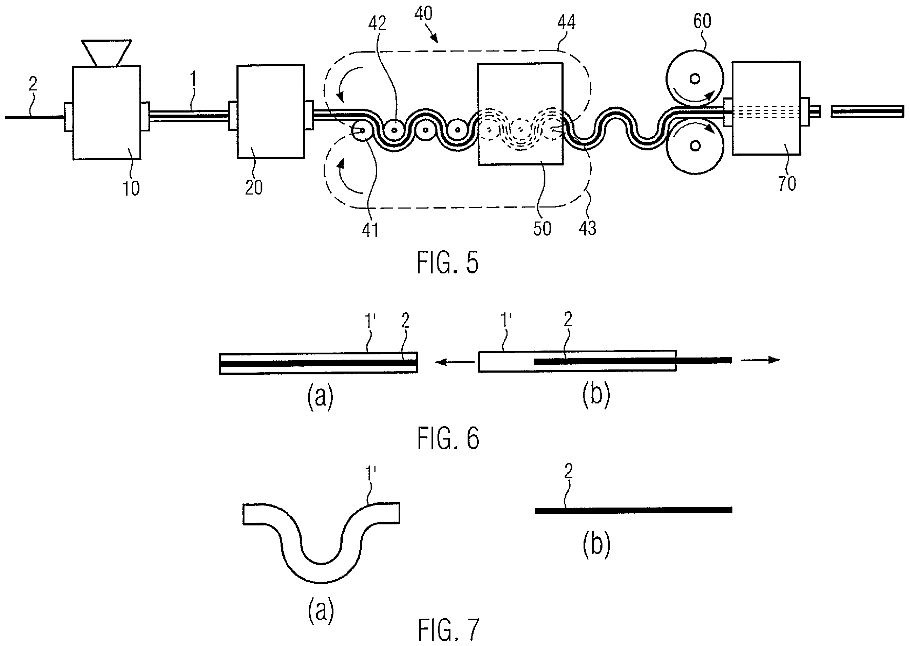

Die Besonderheiten des Verfahrens und der Vorrichtung zur Herstellung von gekrümmten Formschläuchen 1' nach dem zweiten Ausführungsbeispiel werden im Zusammenhang mit den Fig. 5 bis 7 nachstehend beschrieben. Da das zweite Ausführungsbeispiel maßgeblich auf dem ersten Ausführungsbeispiel beruht, werden im Folgenden für identische Merkmale dieselben Bezugszeichen wie im ersten Ausführungsbeispiel verwendet und lediglich die Unterschiede zum ersten Ausführungsbeispiel erläutert.

Im Verfahren und der Vorrichtung nach dem zweiten Ausführungsbeispiel gemäß Fig. 5 werden die Schritte a bis d kontinuierlich ausgeführt. Die Vorrichtung umfasst folgende Einrichtungen:
- Eine Einrichtung 10 zum Aufbringen eines flexiblen Schlauchrohlings 1 auf ein verformbares Formwerkzeug 2, wobei das Formwerkzeug 2 als fester und einstückiger Körper ausgebildet ist, und wobei das Formwerkzeug 2 als Innendorn ausgebildet ist, welcher am Innenumfang des Schlauchrohlings 1 anliegt;
- Eine Einrichtung 40 zum Überführen des Formwerkzeugs 2 und des darauf aufgebrachten Schlauchrohlings 1 durch Verformung in einen gekrümmten Zustand;
- Eine Einrichtung 50 zum Thermofixieren des auf das Formwerkzeug 2 aufgebrachten Schlauchrohlings 1 im gekrümmten Zustand zur Ausbildung des gekrümmten Formschlauchs 1';
- Eine Einrichtung 60 zum Überführen des Formschlauchs 1' durch eine elastische Verformung des Formschlauchs 1' und des Formwerkzeugs durch eine plastische Verformung des Formwerkzeugs 2 in einen linearen Zustand, in welchem der Formschlauch 1' und das Formwerkzeug 2 voneinander trennbar sind; und
- Eine Einrichtung 70 zum Trennen des Formschlauchs 1' und des Formwerkzeugs 2.

Die Besonderheit dieses Verfahrens und dieser Vorrichtung nach dem zweiten Ausführungsbeispiel liegt darin, dass der Schlauchrohling 1 und das Formwerkzeug 2 in Schritt b durch ein mitlaufendes äußeres Formwerkzeug 40 verformt werden. Das mitlaufende äußere Formwerkzeug 40 umfasst eine Vielzahl von Formgebungsabschnitten 41, 42 in der Gestalt von z.B. Walzen oder Negativformen, die auf festgelegten Pfaden 43, 44 in der Förderrichtung und mit der Fördergeschwindigkeit des Verbundes bestehend aus dem Schlauchrohling 1 und dem Formwerkzeug 2 mitlaufen und somit den kontinuierlichen Materialstrang während der Thermofixierung des Schlauchrohlings 1 online in einem räumlich gekrümmten Zustand halten. Erst zwischen den Schritten d und e wird der aus dem Schlauchrohling 1 bzw. dem Formschlauch 1' und dem Formwerkzeug 2 gebildete, kontinuierliche Strang in Abschnitte diskreter Länge zerteilt.

Nach der Thermofixierung und ggf. Abkühlung des Formwerkzeugs 2 wird der Verbund aus dem formfixierten Formschlauch 1' und dem Formwerkzeug 2 unter elastischer Verformung des Formschlauchs 1' und unter plastischer Verformung des Formwerkzeugs 2 in der Einrichtung 60 in einen im Wesentlichen linearen Zustand überführt, abgelängt und getrennt. Das plastisch verformte Formwerkzeug 2 verbleibt nach dem Entdornen im Wesentlichen in einem linearen Zustand (Fig. 7 (b)), während der Formschlauch 1' in die durch Thermofixierung fixierte Form zurückkehrt (Fig. 7 (a)).

Die Vorteile und Anwendungsmöglichkeiten der Erfindung lassen sich stichpunktartig wie folgt zusammenfassen:
- Keine Abdrücke von Schablonen oder Außenwerkzeugen im Endprodukt;
- Entfall des Prozesses "Ausdornen" und des Aufbringens des Schlauchrohlings auf einen Formdorn, dadurch auch:
   ▪ Herstellung langer Geometrien ohne Gefahr von Werkzeugbrüchen;
   ▪ Darstellung kleinerer Innendurchmesser (Rohstoffeinsparung etc.);
   ▪ Keine Gefahr der Verletzung der Innenschicht da nicht ein unvulkanisiertes Produkt auf einen Dorn aufgeschobern wird;
   ▪ Keine Lagentrennungen, da keine Querkräfte auf den Schlauchrohling 1 aufgebracht werden;
   ▪ Entfall von Wartung, Reinigung, Instandhaltung, und Bereitstellung (Dornlager) des Dorns;
   ▪ Geringerer Einsatz von Trennmitteln bei angepasster Oberfläche des Formwerkzeugvormaterials;
- Möglichkeit der Heizung oder Kühlung von innen bei Verwendung eines rohrförmigen Formwerkzeugs 2;
- Möglichkeit wärmeempfindliche Werkstoffe erst nach dem Abkühlen auszudornen;
- Bei Extrusion auf späterem Vulkanisationsformwerkzeug 2 Entfall eines Rohlingsdorns - dadurch:
   ▪ Entfall des Überführens des Schlauchrohlings von einem Rohlingsdorn auf ein Vulkanisationsformwerkzeug;
   ▪ Entfall der Bereitstellung von Rohstoffen und der Herstellung eines Rohlingsdorns sowie Lagerung, Aufbereitung und Entsorgung des Rohlingsformwerkzeugs;
- Bei Verwendung von recyclingfähigen Formwerkzeugmaterialien ökologische und wirtschaftliche Vorteile;
- Geringere Prozessstreuung und gleichbleibende Produkteigenschaften.

Nach dem erfindungsgemäßen Verfahren können bei Formschläuchen 1' mit identischen Innendurchmessern und Wandstärken geringere Biegeradien und größere Längen erreicht werden, als dies mit klassischen Methoden der Fall ist, da Rohlinge leichter in Form gebracht werden können und die fertig gestellten Formschläuche 1' leichter entformbar sind. Ein nach dem erfindungsgemäßen Verfahren hergestellter Formschlauch 1' kann sich sich vor allem durch besonders geringe Innendurchmesser-Länge-Verhältnisse oder besonders geringe Biegeradius-Innendurchmesser/Wandstärke Verhältnisse auszeichnen. Die Abmessungen einiger Varianten von Formschläuchen 1', die nach dem erfindungsgemäßen Verfahren hergestellt sind, werden nachstehend angegeben:
Erste Variante:
   - Innendurchmesser: <= 7,3 mm
   - Wandstärke: <= 3,5 mm
   - Biegeradius: <= 20 mm, insbesondere für einen Biegewinkel >= 30°.

Zweite Variante:
- Innendurchmesser: <= 9,3 mm
- Wandstärke: <= 3,5 mm
- Biegeradius: <= 23 mm, insbesondere für einen Biegewinkel >= 30°.

Dritte Variante:
- Innendurchmesser: <= 3,2 mm
- Länge: >= 150 mm

Vierte Variante:
- Innendurchmesser: <= 7,3 mm
- Länge: >= 600 mm

Die Erfindung ist nicht auf die beschriebenen Ausführungsbeispiele und Varianten beschränkt. Weitere bevorzugte Ausführungsbeispiele können sich durch beliebige Kombinationen der offenbarten Merkmale ergeben.

## Patentansprüche

1. Verfahren zur Herstellung von gekrümmten Formschläuchen (1'), umfassend die Schritte:
a. Verbinden eines flexiblen Schlauchrohlings (1) mit einem verformbaren Formwerkzeug (2), wobei das Formwerkzeug (2) als fester und einstückiger Körper ausgebildet ist, und wobei das Formwerkzeug (2) als Innendorn ausgebildet ist, welcher am Innenumfang des Schlauchrohlings (1) anliegt;
b. Überführen des Schlauchrohlings (1) und des Formwerkzeugs (2) durch Verformung in einen gekrümmten Zustand;
c. Fixieren der Form des mit dem Formwerkzeug (2) verbundenen Schlauchrohlings (1) im gekrümmten Zustand zur Ausbildung des gekrümmten Formschlauchs (1');
d. Überführen des Formschlauchs (1') durch eine elastische Verformung des Formschlauchs (1') und des Formwerkzeugs (2) durch eine plastische Verformung des Formwerkzeugs (2) in einen linearen Zustand, in welchem der Formschlauch (1') und das Formwerkzeug (2) voneinander trennbar sind; und
e. Trennen des Formschlauchs (1') und des Formwerkzeugs (2).

2. Verfahren nach Anspruch 1, **dadurch gekennzeichnet, dass** der Schlauchrohling (1) in Schritt a auf das Formwerkzeug (2) aufgebracht, vorzugsweise aufextrudiert wird.

3. Verfahren nach wenigstens einem der vorangehenden Ansprüche, **dadurch gekennzeichnet, dass** der Schlauchrohling (1) nach Schritt a mit einem verformbaren Innenwerkzeug in ein Formwerkzeug eingeführt wird.

4. Verfahren nach wenigstens einem der vorangehenden Ansprüche, **dadurch gekennzeichnet, dass** das Formwerkzeug (2) in Schritt b und/oder in Schritt d elastisch oder plastisch, vorzugsweise durch Biegung, verformt wird.

5. Verfahren nach wenigstens einem der vorangehenden Ansprüche, **dadurch gekennzeichnet, dass** wenigstens zwei der Schritte a bis e, insbesondere die Schritte a und b, vorzugsweise die Schritte a bis c, bevorzugt die Schritte a bis d, besonders bevorzugt die Schritte a bis e in einem kontinuierlichen Verfahren ausgeführt werden, wobei bevorzugt in Schritt b und/oder in Schritt d der Schlauchrohling (1) bzw. der Formschlauch (1') und/oder das Formwerkzeug (2) durch wenigstens ein weiteres Formwerkzeug (30) verformt wird.

6. Verfahren nach wenigstens einem der vorangehenden Ansprüche, **dadurch gekennzeichnet, dass** der Schlauchrohling (1) und das Formwerkzeug (2) einen kontinuierlichen Strang bilden, der vorzugsweise zwischen den Schritten a und b, zwischen den Schritten b und c, zwischen den Schritten c und d oder zwischen den Schritten d und e in Abschnitte diskreter Länge zerteilt wird.

7. Verfahren nach wenigstens einem der vorangehenden Ansprüche, **dadurch gekennzeichnet, dass** das Formwerkzeug (2) zumindest in Schritt c beheizt wird.

8. Verfahren nach wenigstens einem der vorangehenden Ansprüche, **dadurch gekennzeichnet, dass** der Formschlauch (1'), vorzugsweise vor Schritt d oder zwischen den Schritten d und e oder nach Schritt e, einem Temperprozess zugeführt wird.

9. Verfahren nach wenigstens einem der vorangehenden Ansprüche, **dadurch gekennzeichnet, dass** das Formwerkzeug (2) nach Schritt e einer Wiederverwertung zugeführt wird.

10. Verfahren nach wenigstens einem der vorangehenden Ansprüche, **dadurch gekennzeichnet, dass** die Form des Schlauchrohlings (1) in Schritt c durch Vernetzung des Schlauchrohlings fixiert wird.

11. Verfahren nach wenigstens einem der vorangehenden Ansprüche, **dadurch gekennzeichnet, dass** das Formwerkzeug (2) rohrförmig oder stangenförmig ausgebildet ist.

12. Verfahren nach wenigstens einem der vorangehenden Ansprüche, **dadurch gekennzeichnet, dass** das Formwerkzeug (2) als monolithischer Körper ausgebildet ist.

13. Verfahren nach wenigstens einem der vorangehenden Ansprüche, **dadurch gekennzeichnet, dass** das Formwerkzeug (2) aus einem verformbaren Material, vorzugsweise einem Polymer und/oder aus Metall, ausgebildet ist, wobei eine Schmelztemperatur des Werkstoffs des Formwerkzeugs (2) bevorzugt größer ist als eine Temperatur zum Thermofixieren des Formwerkzeugs in Schritt c.

14. Verfahren nach wenigstens einem der vorangehenden Ansprüche, **dadurch gekennzeichnet, dass** der Schlauchrohling (1) mit einem Druckträger, vorzugsweise einem textilen Druckträger, bevorzugt einem geflochtenen Druckträger versehen wird.

15. Verfahren nach wenigstens einem der vorangehenden Ansprüche, **dadurch gekennzeichnet, dass** der Schlauchrohling (1) nicht mit einem Druckträger versehen ist.

16. Vorrichtung zur Herstellung von gekrümmten Formschläuchen (1'), vorzugsweise in einem Verfahren nach wenigstens einem der vorangehenden Ansprüche, umfassend die folgenden Einrichtungen:
a. Eine Einrichtung (10) zum Verbinden eines flexiblen Schlauchrohlings (1) mit einem verformbaren Formwerkzeug (2), wobei das Formwerkzeug (2) als fester und einstückiger Körper ausgebildet ist, und wobei das Formwerkzeug (2) als Innendorn ausgebildet ist, welcher am Innenumfang des Schlauchrohlings (1) anliegt;
b. Eine Einrichtung (40) zum Überführen des Schlauchrohlings (1) und des Formwerkzeugs (2) durch Verformung in einen gekrümmten Zustand.
c. Eine Einrichtung (50) zum Fixieren der Form des mit dem Formwerkzeug (2) verbundenen Schlauchrohlings (1) im gekrümmten Zustand zur Ausbildung des gekrümmten Formschlauchs (1');
d. Eine Einrichtung (60) zum Überführen des Formschlauchs (1') durch eine elastische Verformung des Formschlauchs (1') und des Formwerkzeugs (2) durch eine plastische Verformung des Formwerkzeugs (2) in einen linearen Zustand, in welchem der Formschlauch (1') und das Formwerkzeug (2) voneinander trennbar sind; und
e. Eine Einrichtung (70) zum Trennen des Formschlauchs (1') und des Formwerkzeugs (2).

## Claims

1. Method for producing curved moulded hoses (1'), comprising the steps of:
a. connecting a flexible hose blank (1) to a deformable mould tool (2), wherein the mould tool (2) is configured as a solid and single-piece body, and wherein the mould tool (2) is configured as an inner mandrel which bears against the inner circumference of the hose blank (1) ;
b. transferring the hose blank (1) and the mould tool (2) into a curved state by deformation;
c. fixing the shape of the hose blank (1), which is connected to the mould tool (2), in the curved state for the purpose of forming the curved moulded hose (1');
d. transferring the moulded hose (1'), by elastically deforming the moulded hose (1'), and the mould tool (2), by plastically deforming the mould tool (2), into a linear state in which the moulded hose (1') and the mould tool (2) are able to be separated from one another; and
e. separating the moulded hose (1') and the mould tool (2).

2. Method according to Claim 1, **characterized in that**, in step a, the hose blank (1) is applied to, preferably extruded onto, the mould tool (2).

3. Method according to at least either of the preceding claims, **characterized in that**, after step a, the hose blank (1) is introduced, with a deformable inner tool, into a mould tool.

4. Method according to at least one of the preceding claims, **characterized in that**, in step b and/or in step d, the mould tool (2) is deformed elastically or plastically, preferably by bending.

5. Method according to at least one of the preceding claims, **characterized in that** at least two of the steps a to e, in particular the steps a and b, preferably the steps a to c, preferably the steps a to d, particularly preferably the steps a to e, are carried out in a continuous method, wherein preferably, in step b and/or in step d, the hose blank (1) or the moulded hose (1') and/or the mould tool (2) are/is deformed by at least one further mould tool (30).

6. Method according to at least one of the preceding claims, **characterized in that** the hose blank (1) and the mould tool (2) form a continuous strand, which is preferably divided into portions of discrete length between the steps a and b, between the steps b and c, between the steps c and d, or between the steps d and e.

7. Method according to at least one of the preceding claims, **characterized in that**, at least in step c, the mould tool (2) is heated.

8. Method according to at least one of the preceding claims, **characterized in that**, preferably before step d or between the steps d and e or after step e, the moulded hose (1') is passed to a heat-conditioning process.

9. Method according to at least one of the preceding claims, **characterized in that**, after step e, the mould tool (2) is recycled.

10. Method according to at least one of the preceding claims, **characterized in that**, in step c, the shape of the hose blank (1) is fixed by subjecting the hose blank to crosslinking.

11. Method according to at least one of the preceding claims, **characterized in that** the mould tool (2) is of tubular or bar-shaped configuration.

12. Method according to at least one of the preceding claims, **characterized in that** the mould tool (2) is configured as a monolithic body.

13. Method according to at least one of the preceding claims, **characterized in that** the mould tool (2) is configured from a deformable material, preferably a polymer and/or metal, wherein a melting temperature of the material of the mould tool (2) is preferably greater than a temperature for heat-setting the mould tool in step c.

14. Method according to at least one of the preceding claims, **characterized in that** the hose blank (1) is provided with a pressure-bearing element, preferably a textile pressure-bearing element, preferably a braided pressure-bearing element.

15. Method according to at least one of the preceding claims, **characterized in that** the hose blank (1) is not provided with a pressure-bearing element.

16. Apparatus for producing curved moulded hoses (1'), preferably in a method according to at least one of the preceding claims, comprising the following devices:
a. a device (10) for connecting a flexible hose blank (1) to a deformable mould tool (2), wherein the mould tool (2) is configured as a solid and single-piece body, and wherein the mould tool (2) is configured as an inner mandrel which bears against the inner circumference of the hose blank (1) ;
b. a device (40) for transferring the hose blank (1) and the mould tool (2) into a curved state by deformation;
c. a device (50) for fixing the shape of the hose blank (1), which is connected to the mould tool (2), in the curved state for the purpose of forming the curved moulded hose (1');
d. a device (60) for transferring the moulded hose (1'), by elastically deforming the moulded hose (1'), and the mould tool (2), by plastically deforming the mould tool (2), into a linear state in which the moulded hose (1') and the mould tool (2) are able to be separated from one another; and
e. a device (70) for separating the moulded hose (1') and the mould tool (2).

## Revendications

1. Procédé de fabrication de tuyaux formés coudés (1'), comprenant les étapes suivantes :
a. connexion d'une ébauche de tuyau flexible (1) à un outil de formage déformable (2), l'outil de formage (2) étant réalisé sous forme de corps fixe et d'une seule pièce, et l'outil de formage (2) étant réalisé sous forme de mandrin intérieur qui s'applique contre la périphérie intérieure de l'ébauche de tuyau (1) ;
b. transfert de l'ébauche de tuyau (1) et de l'outil de formage (2) par déformation dans un état coudé ;
c. fixation de la forme de l'ébauche de tuyau (1) connectée à l'outil de formage (2) dans l'état coudé pour réaliser le tuyau formé coudé (1') ;
d. transfert du tuyau formé (1') par déformation élastique du tuyau formé (1') et de l'outil de formage (2) par déformation plastique de l'outil de formage (2) à un état linéaire dans lequel le tuyau formé (1') et l'outil de formage (2) peuvent être séparés l'un de l'autre ; et
e. séparation du tuyau formé (1') et de l'outil de formage (2).

2. Procédé selon la revendication 1, **caractérisé en ce que** l'ébauche de tuyau (1) est appliquée à l'étape a sur l'outil de formage (2), de préférence par extrusion.

3. Procédé selon au moins l'une quelconque des revendications précédentes, **caractérisé en ce que** l'ébauche de tuyau (1) après l'étape a est introduite avec un outil intérieur déformable dans un outil de formage.

4. Procédé selon au moins l'une quelconque des revendications précédentes, **caractérisé en ce que** l'outil de formage (2) à l'étape b et/ou à l'étape d, est déformé élastiquement ou plastiquement, de préférence par cintrage.

5. Procédé selon au moins l'une quelconque des revendications précédentes, **caractérisé en ce qu'**au moins deux des étapes a à e, en particulier les étapes a et b, de préférence les étapes a à c, de préférence les étapes a à d, particulièrement préférablement les étapes a à e, sont réalisées dans un procédé en continu, de préférence à l'étape b et/ou à l'étape d, l'ébauche de tuyau (1) ou le tuyau formé (1') et/ou l'outil de formage (2) étant déformés par au moins un outil de formage supplémentaire (30).

6. Procédé selon au moins l'une quelconque des revendications précédentes, **caractérisé en ce que** l'ébauche de tuyau (1) et l'outil de formage (2) forment un tronçon continu qui est de préférence divisé entre les étapes a et b, entre les étapes b et c, entre les étapes c et d ou entre les étapes d et e en sections de longueurs discrètes.

7. Procédé selon au moins l'une quelconque des revendications précédentes, **caractérisé en ce que** l'outil de formage (2) est chauffé au moins à l'étape c.

8. Procédé selon au moins l'une quelconque des revendications précédentes, **caractérisé en ce que** le tuyau formé (1'), de préférence avant l'étape d ou entre les étapes d et e ou après l'étape e, est acheminé à un processus de régulation de température.

9. Procédé selon au moins l'une quelconque des revendications précédentes, **caractérisé en ce que** l'outil de formage (2) après l'étape e est acheminé à un recyclage.

10. Procédé selon au moins l'une quelconque des revendications précédentes, **caractérisé en ce que** la forme de l'ébauche de tuyau (1) à l'étape c est fixée par réticulation de l'ébauche de tuyau.

11. Procédé selon au moins l'une quelconque des revendications précédentes, **caractérisé en ce que** l'outil de formage (2) est réalisé sous forme tubulaire ou en forme de tronçon.

12. Procédé selon au moins l'une quelconque des revendications précédentes, **caractérisé en ce que** l'outil de formage (2) est réalisé sous forme de corps monolithique.

13. Procédé selon au moins l'une quelconque des revendications précédentes, **caractérisé en ce que** l'outil de formage (2) est réalisé à partir d'un matériau déformable, de préférence un polymère et/ou à partir de métal, une température de fusion du matériau de l'outil de formage (2) étant de préférence supérieure à une température de thermofixage de l'outil de formage à l'étape c.

14. Procédé selon au moins l'une quelconque des revendications précédentes, **caractérisé en ce que** l'ébauche de tuyau (1) est munie d'un support de pression, de préférence d'un support de pression textile, de préférence d'un support de pression tressé.

15. Procédé selon au moins l'une quelconque des revendications précédentes, **caractérisé en ce que** l'ébauche de tuyau (1) n'est pas pourvue d'un support de pression.

16. Procédé de fabrication de tuyaux formés coudés (1'), de préférence dans un procédé selon au moins l'une quelconque des revendications précédentes, comprenant les dispositifs suivants :
a. un dispositif (10) pour connecter une ébauche de tuyau flexible (1) à un outil de formage déformable (2), l'outil de formage (2) étant réalisé sous forme de corps fixe et d'une seule pièce, et l'outil de formage (2) étant réalisé sous forme de mandrin intérieur qui s'applique contre la périphérie intérieure de l'ébauche de tuyau (1) ;
b. un dispositif (40) pour transférer l'ébauche de tuyau (1) et l'outil de formage (2) par déformation dans un état coudé ;
c. un dispositif (50) pour fixer la forme de l'ébauche de tuyau (1) connectée à l'outil de formage (2) dans l'état coudé pour réaliser le tuyau formé coudé (1') ;
d. un dispositif (60) pour transférer le tuyau formé (1') par déformation élastique du tuyau formé (1') et l'outil de formage (2) par déformation plastique de l'outil de formage (2) à un état linéaire dans lequel le tuyau formé (1') et l'outil de formage (2) peuvent être séparés l'un de l'autre ; et
e. un dispositif (70) pour séparer le tuyau formé (1') et l'outil de formage (2).
